# EUROPÄISCHE PATENTSCHRIFT

(11) **EP 1 698 222 B1**
(45) Veröffentlichungstag und Bekanntmachung des Hinweises auf die Patenterteilung: **23.01.2008**
(21) Anmeldenummer: 05026533.9
(22) Anmeldetag: 06.12.2005
(51) Int. Cl.: A01F 12/18

(54) **Mähdrescher**
Combine harvester
Moissonneuse-batteuse

(30) Priorität: 04.03.2005 DE 102005010592
(43) Veröffentlichungstag der Anmeldung: 06.09.2006
(73) Patentinhaber: CLAAS Selbstfahrende Erntemaschinen GmbH, 33428 Harsewinkel (DE)
(72) Erfinder: Esken, Dirk, 59494 Soest-Meckingsen (DE); Niermann, Martin, 33428 Harsewinkel (DE); Amsbeck, Dieter, 33428 Harsewinkel (DE)
(74) Vertreter: Ellerbrächter, Dirk

(56) Entgegenhaltungen:
- EP-A- 0 516 889
- DE-A1- 3 422 106
- US-A- 2 487 941
- US-A- 3 757 797

## Beschreibung

Die Erfindung betrifft einen selbstfahrenden Mähdrescher mit einem Dreschwerk nach dem Oberbegriff des Anspruchs 1.

Aus der DE 34 22 106 ist ein Mähdrescher mit einem Dreschwerk bekannt, das im wesentlichen aus einer Dreschtrommel und einer Wendetrommel besteht, die zusammen in einem Maschinengehäuse angeordnet sind. Oberhalb der Dreschtrommel ist eine Führung angeordnet, die das Emtegut in zwei Ströme aufteilt, um dem Trennabschnitt das Emtegut gleichmäßig verteilt zuzuführen.

Nachteilig bei diesen bekannten Dreschwerken ist, das die rotierenden Trommeln einen Luftstrom erzeugen, der der Flussrichtung des Erntegutes durch den Mähdrescher entgegengesetzt ist. Dieser Luftstrom transportiert den staubförmigen Anteil des Erntegutes in Fahrtrichtung des Mähdreschers aus dem Schrägförderer heraus, der beim Ernten die Sicht des Fahrers auf das Vorsatzgerät bzw. Feld behindert.

Der Erfindung liegt daher die Aufgabe zugrunde die Nachteile des Standes der Technik zu vermeiden und insbesondere zu verhindern, dass staubartiges Emtegut frontseitig aus dem Schrägförderer des Mähdreschers austritt.

Diese Aufgabe wird erfindungsgemäß durch die kennzeichnenden Merkmale des Anspruchs 1 gelöst. Weitere vorteilhafte Wirkungen des Erfindungsgegenstandes ergeben sich aus den Unteransprüchen.

Dadurch, dass an dem zumindest einem Abstreiforgan zumindest eine Wirbelkammer am Umfang zumindest eines Dreschorgans und/oder zumindest eines Arbeitsorgans ausgebildet ist, wird der von den Dreschorganen und/oder den Arbeitsorganen erzeugte Luftstrom in den hinteren Bereich des Maschinengehäuses geführt.

Indem das oder die Dreschorgane und/oder das oder die Arbeitsorgane in einem Maschinengehause angeordnet sind, wobei sich das Abstreiforgan vom Maschinengehäuse bis annähernd auf den Umfang des Dreschorgans und/oder des Arbeitsorgans erstreckt, wird eine Luftströmung zwischen Maschinengehäuse und dem Dresch- und/oder Arbeitsorgan hindurch nahezu verhindert.

Die Wirbelkammer wird vorteilhafterweise durch ein Gehäuse gebildet, welches zumindest teilweise die Umfangsfläche des Dreschorgans oder des Arbeitsorgans nachvollzieht und in Umfangsrichtung des Dreschorgans oder des Arbeitsorgans wenigstens eine Öffnung aufweist, die der Drehrichtung des Dreschorgans oder des Arbeitsorgans entgegengesetzt ist, so dass der aus dem Dreschorgan oder Arbeitsorgan austretende Luftstrom in das Gehäuse hineinströmt.

Wenn das Abstreiforgan höhenverstellbar ist, kann der Spalt zwischen Dreschorgan oder Arbeitsorgan und dem Abstreifelement angepasst werden.

Wenn das Abstreiforgan pendelnd befestigt ist, kann es ausweichen, falls die Abstreifelement beispielsweise um das Dreschorgan oder das Arbeitsorgan herumgewickeltes Material nicht mehr abstreifen, so dass verhindert wird, dass das Dreschorgan oder das Arbeitsorgan blackiert bzw. das Abstreiforgan beschädigt wird.

Indem das pendeln befestigte Abstreiforgan mit einer Rückstellkraft beaufschlagt wird, weicht das Abstreiforgan erst beim Überschreiten der Rückstellkraft aus, so dass es nicht schon durch geringe, oberschlächtig von der Wendetrommel geförderte Emtegutmengen ständig hin- und herbewegt wird sondern erst bei größeren, über den Umfang der Wendetrommel vorstehenden Emtegutmengen ausweicht.

Weitere vorteilhafte Ausgestaltungen sind Gegenstand weiterer Unteransprüche und werden nachfolgend an Hand eines in mehreren Figuren dargestellten Ausführungsbeispiels näher erläutert.

### Es zeigen:

- Fig.1: eine schematische Seitenansicht auf einen Mähdrescher,
- Fig.2: einen Wendetrommel mit dem Abstreiforgan in der Rückansicht.

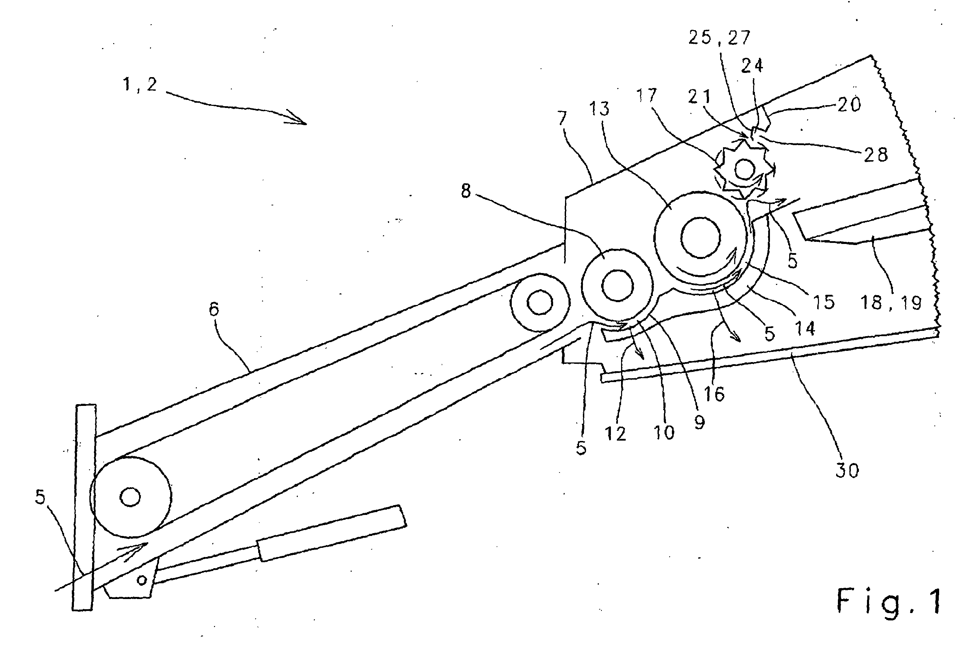

Fig.1 zeigt teilweise eine schematische Seitenansicht einer als selbstfahrender Mähdrescher 1 ausgeführten landwirtschaftlichen Erntemaschine 2. Der Mähdrescher 1 weist frontseitig einen Schrägförderer 6 auf, dem zum Mähen und Aufnehmen des auf dem Feld gewachsenen Emtegutes ein nicht dargestelltes Vorsatzgerät zugeordnet ist, der das Erntegut dem Schrägförderer 6 zuführt Der Schrägförderer 6 fördert das Emtegut 5 an die im Maschinengehäuse 7 angeordneten Dresch- und Arbeitsorgane 8, 13, 17. Das aus dem Schrägförderer 6 kommende Erntegut 5 wird durch die entgegen dem Uhrzeigersinn rotierende Vordreschtrommel 8 erfasst, welche auf ihrer Unterseite von einem Dresch- und Abscheidekorb 9 umschlungen wird. Das Emtegut 5 wird von der Vordreschtrommel 8 durch den zwischen Vordreschtrommel 8 und Dresch- und Abscheidekorb 9 angeordneten Dreschspalt 10 gezogen, wobei das Erntegut 5 von dem Dresch- und Abscheidekorb 9 in seiner Richtung geführt wird. Die Vordreschtrommel 8 bearbeitet das Emtegut 5 intensiv, so dass die Kömer aus den Fruchständen des Emtegutes 5 herausgelöst werden. Ein zum überwiegenden Teil aus Körnern bestehender Erntegutstrom 12 wird durch den Dresch- und Abscheidekorb 9 abgeschieden und nachfolgend nicht näher beschriebenen Arbeitsorganen 30 zugeführt. Der Vordreschtrommel 8 ist in ihrem rückwärtigen Bereich eine weitere ebenfalls entgegen dem Uhrzeigersinn rotierende Dreschtrommel 13 nachgeordnet. Das im rückwärtigen Bereich des Dreschspalts 10 austretende Emtegut 5 wird von der Dreschtrommel 13 erfasst und von der Dreschtrommel 13 durch einen von der Dreschtrommel 13 und einem unterhalb der Dreschtrommel 13 angeordnetem Dresch- und Abscheidekorb 14 begrenzten Dreschspalt 15 gefördert, wobei das Erntegut 5 entlang des Dresch- und Abscheidekorbes 14 geführt wird. Beim Fördern des Emtegutes 5 durch den Dreschspalt 15 wird das Erntegut intensiv von der Dreschtrommel 13 bearbeitet, so dass weitere Körner aus den Fruchtständen des Erntegutes 5 herausgelöst werden. Ein zweiter, ebenfalls im wesentlichen aus Körnern bestehender Erntegutstrom 16 wird an dem Dresch- und Abscheidekorb 14 abgeschieden und ebenso weiteren nicht näher beschriebenen .Arbeitsorganen 30 zugeführt
Es liegt im Rahmen der Erfindung, dass der Mähdrescher 1 eine beliebige Anzahl hintereinandergeschalteter Dreschtrommeln aufweisen kann, wobei die Dreschtrommeln beliebig gestaltet sein können.
Im rückwärtigen Bereich ist der Dreschtrommel 13 eine entgegen dem Uhrzeigersinn rotierende Wendetrommel 17 zugeordnet, die den aus dem Dreschspalt 15 austretende Emtegut 5 annimmt und einem Abscheideorgan 18 wie beispielsweise einem Hordenschüttler 19 zuführt. Die Erfindung ist ausdrücklich nicht auf solche Mähdreschertypen beschränkt sondern bezieht sich beispielsweise auch auf Mähdrescher mit wenigstens einem Rotor als Abscheideorgan.
Oberhalb der Wendetrommel 17 ist ein Abstreiforgan 20 angeordnet, welches die von der Wendetrommel 17 geförderte Emtegutmenge begrenzt, indem es über den Umfang der Wendetrommel 17 hervorstehendes Erntegut abstreift. Das höhenverstellbar an dem Maschinengehäuse 7 befestigte Abstreiforgan 20 erstreckt sich durchgehend vom Maschinengehäuse 7 bis annähernd auf den Umfang der Wendetrommel 17, wobei zwischen dem Umfang der Wendetrommel 17 und dem Abstreiforgan 20 ein Spalt 21 verbleibt, um Kollisionen zu vermeiden. Es ist denkbar, dass das Abstreiforgan 20 pendelnd am Maschinengehäuse 7 gelagert ist, damit es eventuell auszuweichen kann, wenn das Emtegut 5 nicht vom Abstreifer 20 abgestreift wird. Dabei kann das pendeln befestigte Abstreiforgan 20 mit einer Rückstellkraft beaufschlagt sein, so dass sich das Abstreiforgan 20 nicht schon durch geringe, oberschlächtig von der Wendetrommel 17 geförderte Emtegutmengen ständig hin- und herbewegt wird sondern erst bei größeren, über den Umfang der Wendetrommel 17 vorstehenden Erntegutmengen ausweicht. An dem Abstreiforgan 20 ist eine an späterer Stelle noch näher beschriebene erfindungsgemäß Wirbelkammer 24 am Umfang der Wendetrommel 17 ausgebildet, die den von der rotierenden Wendetrommel 17 erzeugten Luftstrom in den hinteren Bereich des Mähdreschers 1 umlenkt. Es liegt im Rahmen der Erfindung, das auch oberhalb der Dreschtrommein 8, 13 Abstreiforgane angeordnet sein können, wobei auch an diesen Abstreiforganen am Umfang der zugehörigen Dreschtrommel 8, 13 erfindungsgemäße Wirbelkammem ausgebildet sein können. Die erfindungsgemäße Wirbelkammer 24 wird durch ein Gehäuse 25 gebildet, welches auf einem Teilstück die Umfangsfläche der Wendetrommel 17 nachvollzieht, wobei das Gehäuse 25 aus einem gekanteten Profil 27 gebildet ist, welches in Umfangsrichtung der Wendetrommel 17 eine Öffnung 28 aufweist. Die Öffnung 28 des Gehäuses 25 ist entgegen der Drehrichtung der Wendetrommel 17 gerichtet. Der von der Wendetrommel 17 erzeugte Luftstrom strömt in das Gehäuse 25 und erzeugt einen Wirbel im Bereich der Wirbelkammer 24. Die von der Wendetrommel 17 geförderte, nachströmende Luft wird an dem Wirbel vorbei in den hinteren Bereich des Maschinengehäuses 7 umgelenkt. Die Wirbelkammer 24 bewirkt somit, dass der von der Wendetrommel 17 geförderte Luftstrom in den hinteren Teil des Mähdreschers 1 gelenkt wird und mit dem Luftstrom das staubförmige Erntegut in den hinteren Teil des Maschinengehäuses 7 gefördert wird.

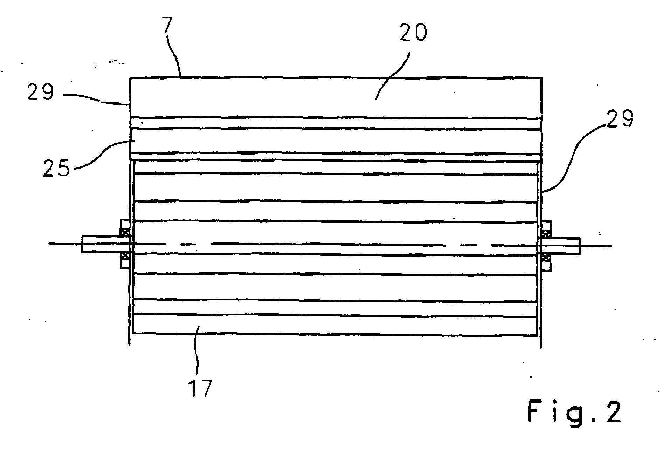

Fig. 2 zeigt eine Wendetrommel 17 mit dem darüber angeordneten Abstreiforgan 20 in der Rückansicht. Das Abstreiforgan 20 erstreckt sich über die Breite der Wendetrommel 17 und das Gehäuse 25 wird an den Enden des Profils 27 durch die Seitenwände 29 des Maschinengehäuses 7 begrenzt.

Es liegt im Rahmen des Könnens eines Fachmannes die beschriebenen Ausführungsbeispiele in nicht dargestellter Weise abzuwandeln oder in anderen Maschinensystemen einzusetzen, um die beschriebenen Effekte zu erzielen, ohne dabei die Erfindung wie in den Ansprüchen definiert zu verlassen.

### Bezugszeichenliste:

- 1: Mähdrescher
- 2: Erntemaschine
- 5: Erntegut
- 6: Schrägföfderer
- 7: Maschinengehäuse
- 8: Vordreschtrommei
- 9: Dresch -und Abscheidekorb
- 10: Dreschspalt
- 12: Erntegutstrom
- 13: Dreschtrommel
- 14: Dresch- und Abscheidekorb
- 15: Dreschspalt
- 16: Erntegutstrom
- 17: Wendetrommel
- 18: Abscheideorgan
- 19: Hordenschüttler
- 20: Abstreiforgan
- 21: Spalt
- 24: Wirbelkammer
- 25: Gehäuse
- 27: Profil
- 28: Öffnung
- 29: Seitenwand
- 30: Abscheideorgan

## Patentansprüche

1. Selbstfahrender Mähdrescher (1) mit einem Dreschwerk, bestehend aus wenigstens einem Dresch- (8, 13) und/oder wenigstens einem Arbeitsorgan (17) sowie zumindest einem Abstreiforgan (20), das wenigstens einem Dreschorgan und/oder wenigstens einem Arbeitsorgan (17) zugeordnet ist,
**dadurch gekennzeichnet,**
**dass** an dem zumindest einen Abstreiforgan (20) zumindest eine Wirbelkammer (24) am Umfang zumindest eines Dreschorgans (8, 13) und/oder zumindest eines Arbeitsorgans (17) ausgebildet ist.

2. Selbstfahrender Mähdrescher mit einem Dreschwerk nach wenigstens einem der vorhergehenden Ansprüche,
**dadurch gekennzeichnet,**
**dass** das oder die Dreschorgane (8, 13) und/oder das oder die Arbeitsorgane (17) in einem Maschinengehäuse (7) angeordnet sind, wobei sich das Abstreiforgan (20) vom Maschinengehäuse (7) bis annähernd auf den Umfang des Dreschorgans (8,13) oder des Arbeitsorgans (17) erstreckt.

3. Selbstfahrender Mähdrescher mit einem Dreschwerk nach Anspruch 1,
**dadurch gekennzeichnet,**
**dass** die Wirbelkammer (24) durch ein Gehäuse (25) gebildet wird, welches zumindest teilweise die Umfangsfläche des Dreschorgans (8, 13) oder des Arbeitsorgans (17) nachvollzieht und in Umfangsrichtung des Dreschorgans (8, 13) oder des Arbeitsorgans (17) wenigstens eine Öffnung (28) aufweist, die der Drehrichtung des Dreschorgans (8, 13) oder des Arbeitsorgans (17) entgegengesetzt ist.

4. Selbstfahrender Mähdrescher mit einem Dreschwerk nach wenigstens einem der vorhergehenden Ansprüche,
**dadurch gekennzeichnet,**
**dass** das Abstreiforgan (20) höhenverstellbar ist.

5. Selbstfahrender Mähdrescher mit einem Dreschwerk nach wenigstens einem der vorhergehenden Ansprüche,
**dadurch gekennzeichnet,**
**dass** das Abstreiforgan (20) pendelnd befestigt ist.

6. Selbstfahrender Mähdrescher mit einem Dreschwerk nach wenigstens einem der vorhergehenden Ansprüche,
**dadurch gekennzeichnet,**
**dass** das pendelnd befestigte Abstreiforgan (20) mit einer Rückstellkraft beaufschlagt ist.

## Claims

1. A self-propelled combine harvester (1) having a threshing mechanism comprising at least one threshing member (8, 13) and/or at least one working member (17), and at least one stripping member (20) which is associated with at least one threshing member and/or at least one working member (17),
**characterised in that**
at least one swirl chamber (24) is provided at the at least one stripping member (20) at the periphery of at least one threshing member (8, 13) and/or at least one working member (17).

2. A self-propelled combine harvester having a threshing mechanism according to claim 1 **characterised in that** the threshing member or members (8, 13) and/or the working member or members (17) is or are arranged in a machine housing (7), wherein the stripping member (20) extends from the machine housing (7) to approximately the periphery of the threshing member (8, 13) or the working member (17).

3. A self-propelled combine harvester having a threshing mechanism according to claim 1 **characterised in that** the swirl chamber (24) is formed by a housing (25) which at least partially follows the peripheral surface of the threshing member (8, 13) or the working member (17) and which in the peripheral direction of the threshing member (8, 13) or the working member (17) has at least one opening (28) which is opposite to the direction of rotation of the threshing member (8, 13) or the working member (17).

4. A self-propelled combine harvester having a threshing mechanism according to at least one of the preceding claims **characterised in that** the stripping member (20) is height-adjustable.

5. A self-propelled combine harvester having a threshing mechanism according to at least one of the preceding claims **characterised in that** the stripping member (20) is mounted for a swinging pendulum movement.

6. A self-propelled combine harvester having a threshing mechanism according to at least one of the preceding claims **characterised in that** the stripping member (20) which is mounted for a swinging pendulum movement is acted upon by a return force.

## Revendications

1. Moissonneuse-batteuse (1) automotrice avec un mécanisme batteur, composée d'au moins un organe batteur (8,13) et/ou au moins un organe de travail (17) ainsi que d'au moins un organe nettoyeur (20) qui dépend d'au moins un organe batteur et/ou d'au moins un organe de travail (17), **caractérisée en ce que**
sur le au moins organe nettoyeur (20), au moins une chambre de turbulence (24) est réalisée sur l'espace occupé par au moins un organe batteur (8,13) et/ou au moins d'un organe de travail (17).

2. Moissonneuse-batteuse automotrice avec un mécanisme batteur selon au moins l'une des revendications précédentes,
**caractérisée en ce que**
le ou les organes batteurs (8,13) et/ou le ou les organes de travail (17) sont disposés dans un bâti de machine (7), l'organe nettoyeur (20) s'étendant du bâti de machine (7) jusqu'à proximité de l'espace occupé par l'organe batteur (8,13) ou de l'organe de travail (17).

3. Moissonneuse-batteuse automotrice avec un mécanisme batteur selon la revendication 1,
**caractérisée en ce que**
la chambre de turbulence (24) est formée d'un corps (25), lequel comprend au moins partiellement la surface de l'espace occupé par l'organe batteur (8,13) ou de l'organe de travail (17) et présente, dans la direction de l'espace occupé par l'organe batteur (8,13) ou de l'organe de travail (17), au moins une ouverture (28) qui est opposée au sens rotatif de l'organe batteur (8,13) ou de l'organe de travail (17).

4. Moissonneuse-batteuse automotrice avec un mécanisme batteur selon au moins l'une des revendications précédentes, **caractérisée en ce que** l'organe nettoyeur (20) est réglable en hauteur.

5. Moissonneuse-batteuse automotrice avec un mécanisme batteur selon au moins l'une des revendications précédentes,
**caractérisée en ce que**
l'organe nettoyeur (20) est fixé à la manière d'un pendule.

6. Moissonneuse-batteuse automotrice avec un mécanisme batteur selon au moins l'une des revendications précédentes,
**caractérisée en ce que**
l'organe batteur (20) fixé à la manière d'un pendule est sollicité par une force de rappel.
